# EUROPEAN PATENT SPECIFICATION

(11) **EP 1 668 246 B1**
(45) Date of publication and mention of the grant of the patent: **29.10.2014**
(21) Application number: 03747843.5
(22) Date of filing: 29.09.2003
(51) Int. Cl.: F03D 11/00

(54) **LIGHTNING PROTECTION SYSTEM FOR WIND TURBINE BLADE**
BLITZSCHUTZSYSTEM FÜR WINDTURBINENSCHAUFEL
SYSTEME DE PROTECTION DE FOUDRE POUR A UNE PALE D'AEROGENERATEUR

(43) Date of publication of application: 14.06.2006
(60) Divisional application: 14168604.8
(73) Proprietor: Vestas Wind Systems A/S, 8200 Aarhus N (DK)
(72) Inventor: HIBBARD, Paul, Southampton SO14 3HR (GB); CHRISTIANSEN, Claus, DK-6950 Ringkobing (DK)
(74) Representative: Plougmann & Vingtoft A/S
(86) International application number: PCT/DK2003/000641
(87) International publication number: WO 2005/031158

(56) References cited:
- EP-A- 0 707 145
- EP-A- 1 154 537
- DE-A1- 4 436 197
- US-A- 5 632 602
- E. HAU: "Windkraftanlagen" 1996, SPRINGER VERLAG , BERLIN, DE 241430 , XP002328071 * Heading "Blitzschutz" * pages 463-464

## Description

### Background of the invention

The invention relates to a wind turbine blade according to the preamble of claim 1, a wind turbine according to the preamble of claim, a method of providing lightning receptor means to a wind turbine blade and use hereof.

### Description of the Related Art

Typically, wind turbines are erected in areas with superior wind conditions such as rural areas comprising only a few tall obstacles e.g. trees or buildings. However, wind turbines are erected with increasingly higher towers and rotor blades in order to take the most efficient use of the wind and, with wind turbines being the tallest objects in an area, protection of the wind turbines against lightning strokes is thus a necessity.

A well-known lightning protecting system for a wind turbine involves a lightning receptor at the tip of every rotor blade in order to capture the lightning stroke. The lightning is discharged to a ground potential via a down conductor inside the blade and down conductors in the nacelle and tower. In order to transfer the lightning from the down conductor of the rotating blade to the down conductor of the stationary nacelle, the lightning current is lead through the rotor blade shaft to the nacelle. The nacelle comprises means e.g. slip-rings which are connected to the shaft and thus allows the current to be removed from the shaft and transferred to the down conductor of the nacelle.

Lightning systems with apparently improved means of capturing the lightning have been suggested.

An example is disclosed in EP patent application no. 1 154 537 in which the wind turbine blades are mounted with lightning receptors. The receptors are caps made in aluminium which are connected to aluminium profiles at the trailing edge of the blade. The receptors are made in an aluminium foil or a similarly thin aluminium material in order to keep the weight down. Another example is disclosed in DE 4436 197 A1.

The functionality of the lightning system includes the fact that the lightning is likelier to strike at the larger surface of the caps due to the lower resistance toward the ground potential. The current of the lightning is subsequently directed through the aluminium profile to a ground potential.

A problem with the lightning protection system of the EP patent application is the fact that the energy of the lightning generates considerable heat resulting in damage to the section of the wind turbine blade positioned underneath the cap. The damage may be cracks or holes in the glass fibre surface.

A further problem is the fact that the lightning energy vaporises the aluminium at the position of the stroke resulting in a lesser reliability of the lightning protection.

One of the objects of the invention is to establish a lightning receptor for wind turbines without the above-mentioned disadvantage.

It is especially an object of the invention to create a receptor that may sustain numerous lightning strokes without requiring inspection or service of the wind turbine blade and the receptor.

Further, it is an object of the invention to establish a lightning receptor for wind turbines that is easy to integrate and install in a wind turbine blade.

### The invention

The invention relates to a wind turbine blade according to claim 1 comprising lightning protection means in which at least one section of the tip of said blade is made in solid metal and is included as part of said lightning protection means.

Hereby, is obtained a wind turbine blade may sustain numerous lightning strokes at the solid metal sections of the blade tip without requiring inspection or service of the wind turbine blade. Especially, the temperature rise in the solid metal and the blade tip as such will be less than with the prior art as the heat may easier be deposited to the surroundings.

The solid metal with less resistance will ensure that even at worst case scenarios, the metal will only sustain minor damage with no effect on the functionality of the wind turbine and the lightning protection means. Also solid metal makes it easier to more firmly connect the lightning down conductor to the lightning receptor. The less resistance in the lightning receptor and in the receptor connection to the lightning down conductor ensures that the lightning current also deposits less heat at the wind turbine blade tip.

The phrase "section of the tip ... made in solid metal" is to be understood as a section in which the three dimensions (length, breadth and thickness) are of some extend beyond negligible.

In an aspect of the invention, said blade tip is made in metal. Hereby, it is possible for the full blade tip to be part of the lightning protection system. Further, the blade tip may easily endure the temperature rise without subsequently requiring inspection or service.

In a further aspect of the invention, said metal comprises a metal alloy. The metal alloy comprises excellent corrosion resistance to water and especially salt water. Further, it has an excellent erosion resistance - erosion in form of wind, rain and dust.

In another aspect of the invention, said metal comprises a cobber alloy such as CuSn₁₀Zn₂ (Bronze RG10) or CuSn₅Zn₅Pb₅ (Bronze LG2). Hereby, it is possible to achieve good electrical conductivity such as 13.8% IACS (relative conductivity to copper).

Further, it is possible to achieve a high melting temperature 850°C. The melting temperature is the predominant factor in material removal rates during lightning strike.

In an aspect of the invention, said at least one section made in solid metal includes the initial curved or bend parts of the leading and/or trailing edges seen from the top point. The lightning is more likely to strike at these parts and the parts are advantageously secured with solid metal sections.

In another aspect of the invention, the length of said at least one section made in solid metal is below 1 % of the total blade length and preferably between 0.1 % and 0.5 % of the total blade length. As sections of the blade tip are made in solid metal, weight is a subject of consideration and thus the length of the blade tip needs to be as small as possible without losing the ability of intercepting lightning strokes. As lightning often strikes at the curved or bend parts of the leading and/or trailing edges it is advantageous that the blade tip has a length which extend beyond these parts of the wind turbine blade.

In a further aspect of the invention, said blade tip is mounted with connection rods into an opening in the top of the wind turbine blade. Hereby, it is possible to allow variations between blades e.g. by using a different number of rods or rods of different sizes.

The connection with a number of rods also ensures an enduring connection which is very important in view of the forces that the wind turbine blade faces. Particularly, the weight of the blade tip demands an enduring connection.

In an even further aspect of the invention, said connection rods are made in a non-conductive material such as glass fibre e.g. pultruded glass fibre rods. Hereby, it is ensured that the lightning will not strike at the connection area between the blade tip and the wind turbine blade.

It is also possible to achieve good tensile and bending stiffness. The connection rods may be bonded into both the metal tip and the glass fibre blade using a structural adhesive and may be adapted to the specific blade e.g. by sanding or polishing the rods before bonding.

Further, the use of glass fibre rods ensures that high strength is obtained with a relative low weight. Even further, the connection between glass fibre surfaces of the blade and rods is advantageously due to the similar material characteristics such as material strength.

In a further aspect of the invention, the blade tip is painted e.g. in a white or grey colour. The tip is painted in order to minimise thermal heat absorption by the metal of the tip from the sun. By painting the tip white the amount of solar radiation which will be absorbed is significantly reduced.

In an aspect of the invention, the blade tip is one part including a connection opening for the lightning down conductor and at least one mounting hole for said connection rods. Hereby, a simple and strong construction of the wind turbine blade is achieved.

In another aspect of the invention, the blade tip comprises an outer and inner tip part. Hereby, it is possible to connect the inner and outer tip parts to the wind turbine blade in separate actions which will simplify the mounting process of the blade tip. The security against connection failures is thus enhanced.

In an aspect of the invention, said blade tip comprises an outer and inner tip part whereby the inner tip may be mounted to the wind turbine blade before the outer tip. This makes the mounting simpler, e.g. in connecting the lightning down conductor to the blade tip, and less heavy for the person performing the process.

In an aspect of the invention, said outer tip part defines the outline of the blade tip.

In an aspect of the invention, the bottom of said outer tip part comprises an indentation substantially corresponding to the shape of said inner tip part and provides a holding area for said inner tip part. Hereby, it is possible to easily slide the outer tip part down on the inner tip part after it has been mounted to the wind turbine blade.

In an aspect of the invention, said inner tip part comprises a connection area for the lightning down conductor and at least one mounting hole for said connection rods. Hereby, it is easily possible to establish a durable connection between the inner tip part and the wind turbine blade.

In an aspect of the invention, said connection area further comprises retaining means for the lightning down conductor such as a retaining block. Hereby, it is possible to establish a durable connection between the inner tip part and the lightning down conductor. Particularly, the use of an area comprising a number of spaced apart grooves ensures that the conductor is retained in a position involving less tensions e.g. due to bending or twisting of the conductor.

In an aspect of the invention, said blade tip is one part including a connection opening for the lightning down conductor. Hereby, a more simple construction of the blade tip is achieved.

In an aspect of the invention, said one part blade tip comprises at least one mounting hole for said connection rods or mounting bolts. Hereby, a durable connection between the blade tip and the wind turbine blade is achieved.

In an aspect of the invention, said blade tip comprises two halves divided from front edge to trailing edge of the wind turbine blade. Hereby, a blade tip is achieved which is particularly easy to position around the connection means and subsequently mount on the blade.

In another embodiment the connection means are mounted in the opening of the wind turbine blade and the halves are subsequently mounted on the connection means and the lightning down conductor.

In an aspect of the invention, inner surfaces of said blade tip halves comprise hole halves whereby the connection means and the lightning down conductor may durably and uniformly be retained by forcing the halves toward each other.

In another aspect of the invention, said hole halves define openings for connection rods and a lightning down conductor.

In another aspect of the invention, said blade tip weight at least 5 kilogram and usually more than 10 kilogram such as approximately 12 kilogram with a 32 meter wind turbine blade. Hereby, an advantageous relation is achieved between weight (ensuring continuous good lightning receptor qualities) and forces introduced on the blade tip (upheld by the connection to the wind turbine blade).

In a further aspect of the invention, an end of said lightning down conductor (10) is clamped with a conductor connector such as a conductor sleeve corresponding in shape to at least one opening (14) in the blade tip. Hereby, an enhancement of the connection to the blade tip is achieved and thus a reduction in the connection resistance.

The invention also relates to a wind turbine according to claim 21 wherein at least one section of every tip of said at least one wind turbine blade is made in solid metal and is included as part of said lightning protection means.

Hereby, a wind turbine is achieved with improved lightning protection means e.g. in its ability to sustain numerous lightning strokes without requiring inspection or service of the wind turbine blades and the lightning receptor.

### Figures

The invention will be described in the following with reference to the figures in which
- fig. 1: illustrates a large modem wind turbine with three wind turbine blades,
- fig. 2: illustrates one wind turbine blade with a blade tip according to the invention,
- fig. 3: illustrates the connection of the down conductor to the blade tip according to the invention,
- fig. 4: illustrates a preferred embodiment of an outer tip part of the blade tip,
- fig. 5: illustrates a preferred embodiment of inner tip part of the blade tip,
- fig. 6a and 6b: illustrate the preferred embodiment of the outer tip part seen from the side and bottom, respectively,
- figs. 7a to 7e: illustrate the preferred embodiment of the inner tip part in a number of different views,
- fig. 8: illustrates different cross section views of the outer tip part,
- fig. 9: illustrates different cross section views of the inner tip part,
- fig. 10: illustrates the inner tip part mounted in the holding area of the outer tip part,
- fig. 11: illustrates another embodiment of the blade tip according to the invention,
- fig. 12: illustrates a further embodiment of the blade tip according to the invention, and
- fig. 13: illustrates an even further embodiment of the blade tip according to the invention.

### Detailed description

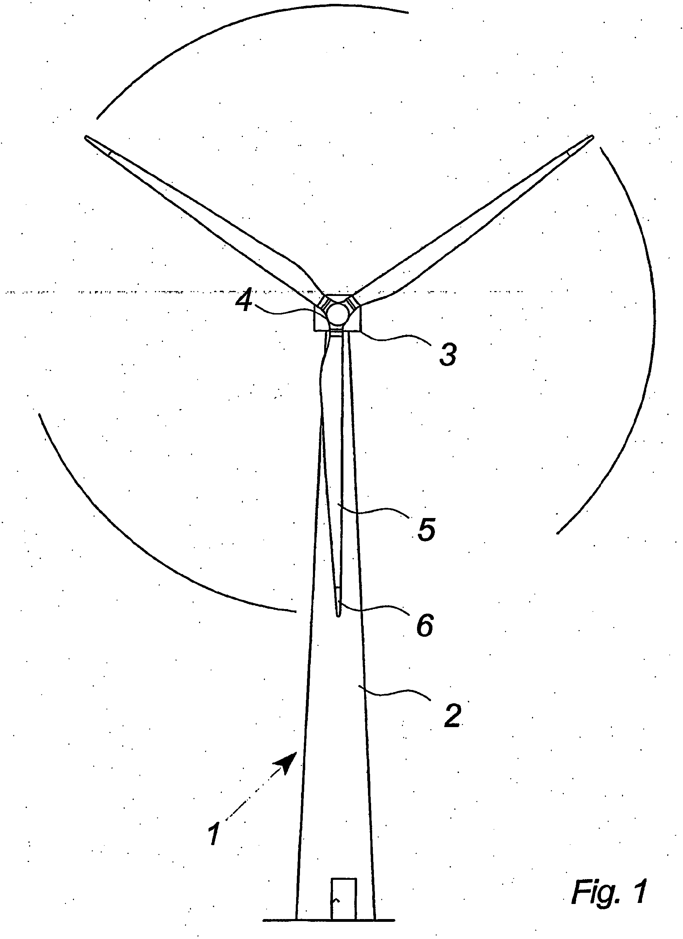

Fig. 1 illustrates a modem wind turbine 1 with a tower 2 and a wind turbine nacelle 3 positioned on top of the tower. The wind turbine rotor, comprising three wind turbine blades 5, is connected to the nacelle through the low speed shaft which extends out of the front of the nacelle. At the opposite end of the wind turbine blades extend the tip 6.

As illustrated in the figure, wind beyond a certain level will activate the rotor due to the lift induced on the blades and allow it to rotate in a perpendicular direction to the wind. The rotation movement is converted to electric power, which is supplied to the utility grid.

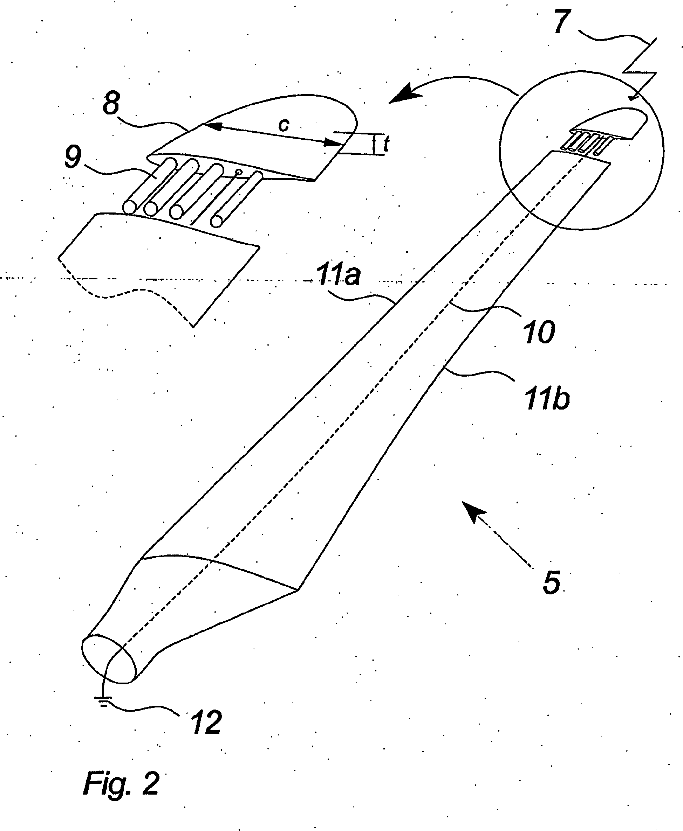

Fig. 2 illustrates a wind turbine blade with a blade tip according to the invention positioned adjacent to the blade. The wind turbine blade may be any kind of normal blade such as a wind turbine blade made in a composite material e.g. glass fibre.

The blade tip almost corresponds - in size and form - to the normal tip of a wind turbine blade and includes at least one section made in solid metal. Further, the blade tip is included as part of the lightning protection means of the wind turbine.

The blade tip is also illustrated with four connection rods that are mounted into openings of the blade tip. The rods are preferably made in a non-conductive material such as glass fibre e.g. pultruded glass fibre rods.

The rods are illustrated with different diameters in which the rod diameter corresponds with the thickness of the wind turbine blade at the position of the rod - a thicker blade position equals a thicker rod. The diameters of the rods may preferably be chosen in the range of 5 to 50 millimeters such as 10, 20 or 30 millimeters.

The length of the rods may be varied in accordance with the load that the different rods experience at their position. The length of the rod may preferably extend from 150 to 800 millimeters in which between 40 and 200 millimeters of the rod is entered into the openings of the blade tip and between 110 and 600 millimeters of the rod is entered into the blade opening.

The number of rods may also be varied in accordance with wideness of the wind turbine blade at mounting place for the blade tip e.g. between 3 and 6 rods such as 4 or 5 rods.

The preferred data of the rods especially match with a standard 32 meter wind turbine blade. Smaller or larger blades may require a change of data. However, the illustrated embodiments of a blade tip with sections of solid metal are weighting more than 5 kilogram and usually more than 10 kilogram such as 12 kilogram for the mentioned standard wind turbine blade.

The blade is illustrated as ending without a blade tip in which the blade may have been manufactured in this way or the normal blade tip may have been removed after the manufacturing of the blade. Even further, the removal may be part of a retro fit process on wind turbine blades which already have been in use and dismounted from the wind turbine in question. The removal may e.g. be performed with an angle grinder or a similar cutting tool.

The missing blade tip leaves an opening into the top of the blade. The interior surface of the opening in the blade is cleaned, degreased, grinded and/or abraded in order to establish a clean and accessible surface.

Further, the interior of the blade is sealed beneath and beside the range of the connection rods in order to define a volume e.g. by filling PVC foam or pieces of PVC foam into the interior at the desired place. The volume is subsequently filled with strong adhesive material such as one or two component epoxy glue. The epoxy may hold the blade tip to the rest of the wind turbine blade by bonding the interior surface of the blade to the rods. The adhesive material is also used to bond the rods to the blade tip.

Preferably, the blade tip is made slightly smaller at the bottom than the wind turbine blade allowing the blade tip to slightly enter the opening of the blade. After the bonding between the blade tip and the rest of the wind turbine blade, finishing work is performed on the blade tip and the connection area. The finishing work also includes the final painting of the blade tip and the connection area.

The blade tip according to the invention is also connected to the lightning down conductor of the wind turbine blade and thus to the ground potential.

Fig. 2 also illustrates an enlarged section including the wind turbine blade and the upper part of the wind turbine blade. The wind turbine blade and blade tip comprise a cord c, a thickness t and a t/c relation at any given position of the blade. The t/c relation of the blade tip is usually between 0 and 14 % (at the top point and the blade connection, respectively).

Also the wind turbine blade tip is generally defined as the part of the wind turbine blade in which the front and trailing edges leave a substantially straight direction and start to bend toward the top point of the wind turbine blade.

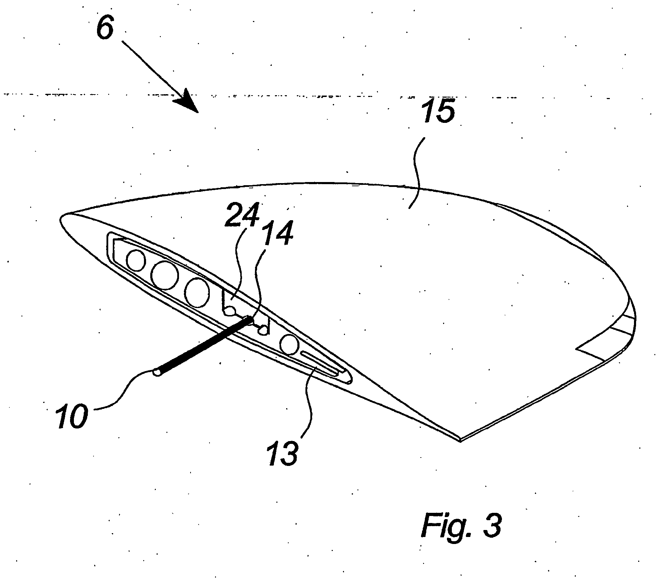

Fig. 3 illustrates the connection of the lightning down conductor 10 to the blade tip 6 according to the invention. Further, it is illustrated that the blade tip is divided in two parts; an inner 13 and outer tip part 15. The inner tip part is integrated into outer tip part at the bottom of the outer tip part.

The lightning down conductor is illustrated as a conductor entered into the blade tip at a connection area 14 for the conductor. The connection area is established as three grooves into the surface of the inner tip part in which each groove is capable of receiving the conductor extending out of the blade opening. The conductor is equipped with a conductor connector e.g. a metal cable sleeve which is clamped on at the extending end. The extending end with the connector is placed in the groove which is most favorably for the conductor.

The withholding of the conductor in the connection area 14 is obtained by forcing a flat block 24 down on top of the conductor 10. The size of the block corresponds to the connection area 14 for the lightning down conductor of the grooves and is forced against the conductor by tightening bolts penetrating the block and the inner tip part.

The conductor is preferably metal a woven copper or aluminum rope or cable such as a tin coated copper cable, of diameters between 50 and 120 mm².

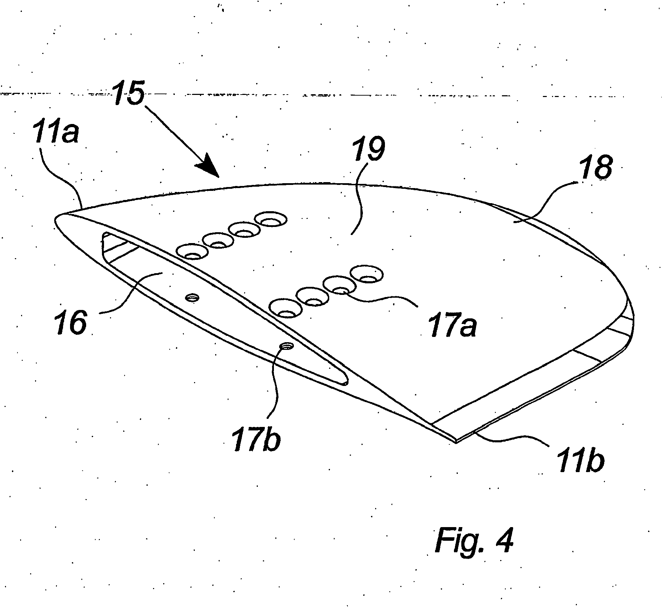

Fig. 4 illustrates a preferred embodiment of an outer tip part 15 of the blade tip.

The outer tip part comprises leading edge 11 a and the trailing edge 11b ending in the top point 18 of the blade tip and the wind turbine blade. Especially the trailing edge 11b finally makes a sharp curve in order to meet the top point from the previous substantially straight curves of the wind turbine blade edges.

The surfaces 19 of the blade tip including the top point and the leading and trailing edges form the active area of the lightning receptor.

At the bottom of the outer tip part the empty holding area 16 for the inner tip part is illustrated. The holding area comprises a symmetrical six-sided shape (not illustrated on this figure). The sides around the holding area comprise a number of corresponding mounting holes 17a, 17b. After the positioning of the inner tip part in the holding area 16 bolts are mounted in the holes in order to hold the inner tip part.

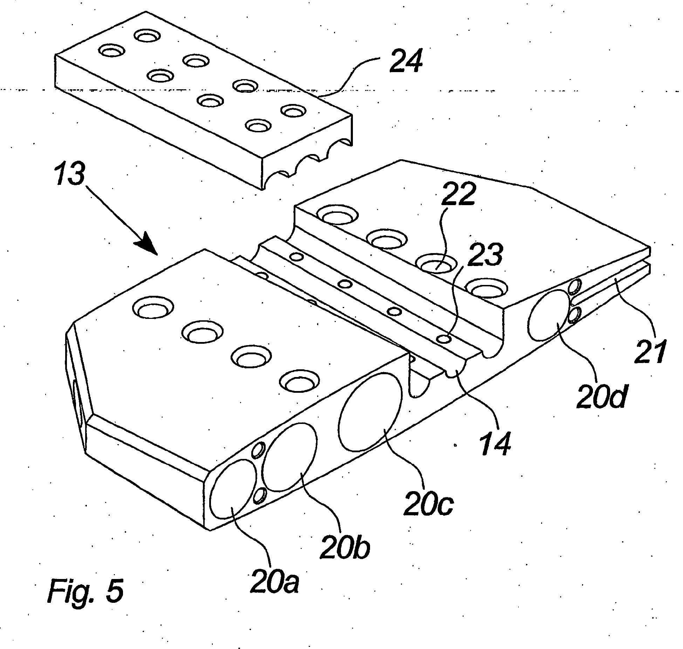

Fig. 5 illustrates a preferred embodiment of inner tip part 13 of the blade tip.

The inner tip part has a six-sided shape substantially corresponding to the shape of the holding area 16 of the outer tip part 15. Further, the mounting holes 22 in the inner tip part correspond with the mounting holes 17a, 17b of the outer tip part in position and number.

The inner tip part also comprises a mounting slit 21 at one side allowing the side to be compressed during the process of mounting the inner tip part into the holding area of the outer tip part. The mounting slit of the inner tip part ensures a press fit between the inner and outer tip part after mounting.

The inner tip part further comprises four holes 20a-20d for the connection rods. The holes go through the inner tip part and have different diameters corresponding to the different rods.

Finally, the inner tip part comprises the connection area 14 with the three grooves for the lightning down conductor. The grooves extend from the front to the back of the inner tip part. The two walls between the three grooves comprise holes 23 allowing the securing of the conductor by forcing a flat block 24 down on top of the conductor and entering bolts through the holes in the flat block and the walls.

In another embodiment, the connection area 14 may - after the positioning of the down conductor in the groove - be filled with tin solder or a similar electric conductive bonding material.

The inner and outer tip is preferably made in the same metal alloy in order to avoid galvanic corrosion between dissimilar metals brought into electrical contact. The metal may be cobber or a cobber alloy such as CuSn₁₀Zn₂ (Bronze RG10), CuSn₅Zn₅Pb₅ (Bronze LG2) or brass. However, other metals or metal alloys may be used that comprise the relevant material characteristics such as aluminium or manganese bronze or similar aluminium and manganese alloys.

The inner and outer tip part may preferably be made using casting technique such as sand casting.

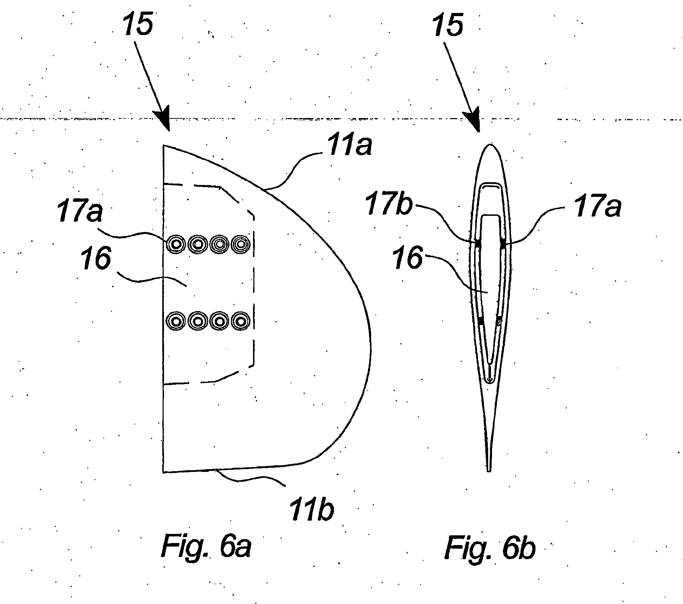

Fig. 6a and 6b illustrate the preferred embodiment of the outer tip part 15 seen from the side and bottom, respectively.

The views especially sketch the outline of the holding area 16 for the inner tip part and curves of the leading and trailing edges toward the top point of the wind turbine blade. As seen the shape of the holding area corresponds to the six-sided shape of the inner tip part. Further, it is seen how especially the trailing edge bends sharply in order to meet the top point of the blade tip and thus the wind turbine blade.

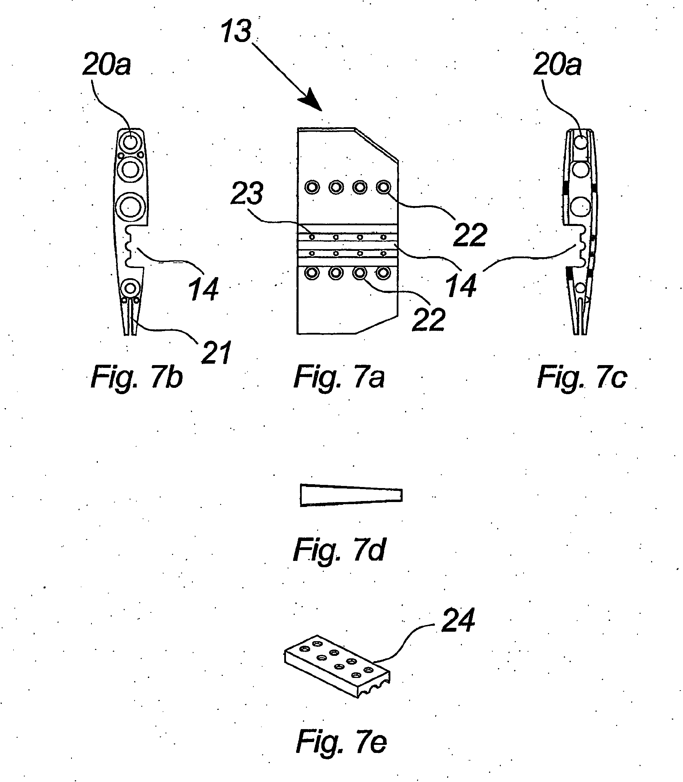

Figs. 7a to 7e illustrate the preferred embodiment of the inner tip part in a number of different views.

As seen in figs. 7b and 7c the grooves for the down conductor and the holes for the connection rods extend through the inner tip part. Further, it is seen from the figures how the inner tip part has a tapering shape toward the mounting slit.

Fig. 7d illustrates the inner tip part seen from the side whereby the tapering shape of the part becomes apparent.

Fig. 7e illustrates the flat block 24 to be forced down on top of the conductor in the connection area.

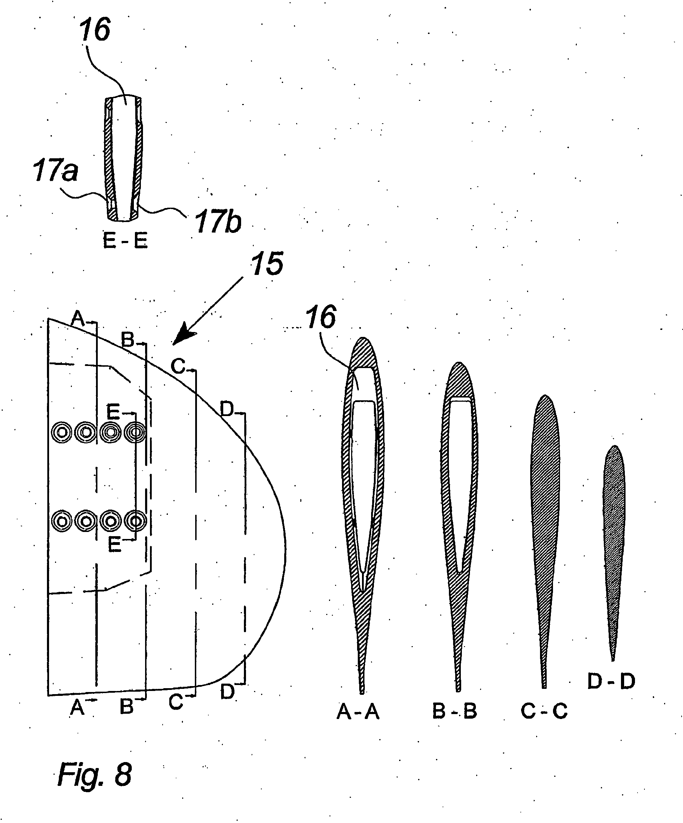

Fig. 8 illustrates the outer tip part and a number of different cross section views of the outer tip part.

The cross section view starts with fig. 8 (A-A) which illustrates a cross view centrally through the holding area. As seen the metal material surrounding the area is thicker behind the leading and trailing edges.

The cross section view of fig. 8 (B-B) illustrates how the holding area is terminated toward the top point of the blade tip. Further, the solid metal sections behind the leading and trailing edges are becoming more significant.

Consequently, the cross views of fig. 8 (A-A, B-B) illustrate two solid sections of the blade tip according to the invention; the sections behind the leading and trailing edge, respectively, and in front of the holding area.

The cross section views of fig. 8 (C-C, D-D) illustrate how also the last section of the blade tip is made in solid metal material. Especially, the section of solid metal material is positioned around the sharply bends of the leading and trailing edges.

The cross section view of fig. 8 (E-E) illustrates a section of the holding area 16 including the corresponding holes 17a, 17b.

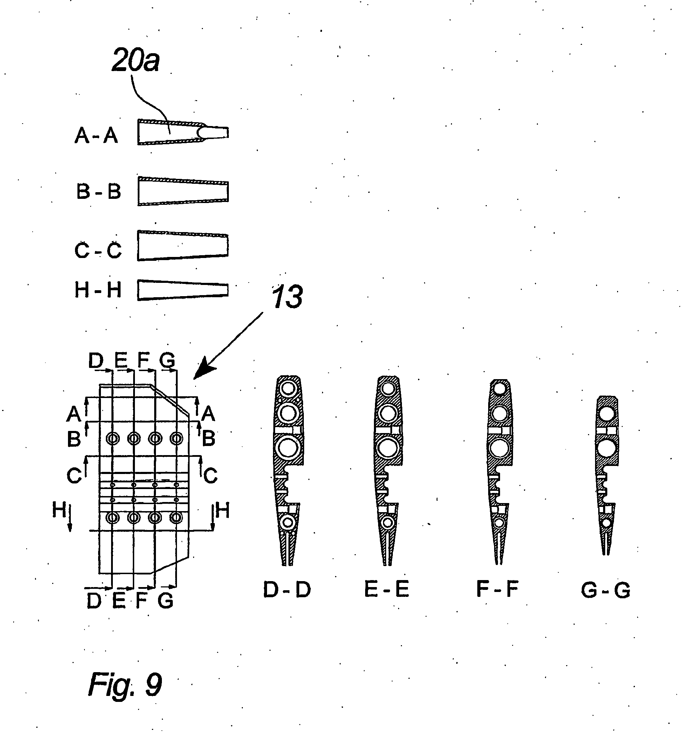

Fig. 9 illustrates different cross section views of the inner tip part in the transverse (H-H, A-A to C-C) and the longitudinal direction (D-D to G-G) of the part.

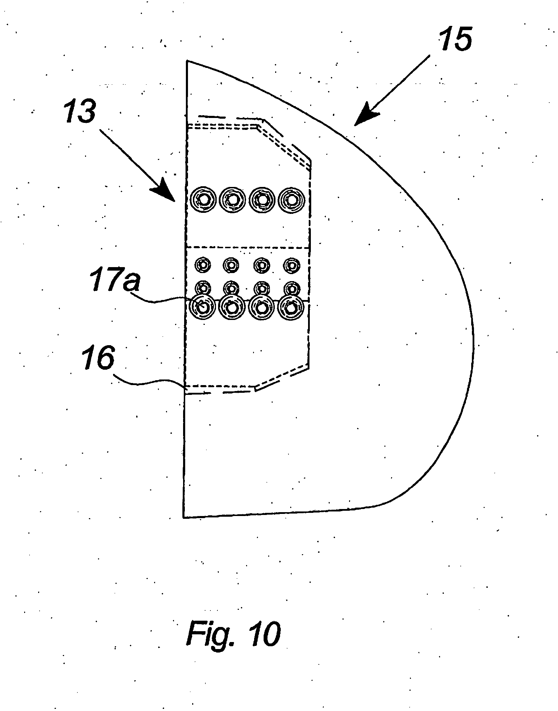

Fig. 10 illustrates the inner tip part 13 mounted in the holding area 16 of the outer tip part 15. It is illustrated that the inner tip part is fully integrated into the holding area of the outer tip part 15. Further, it is seen that the mounting holes 17a are ready for the bolt to secure the inner tip part to the rest of the blade tip.

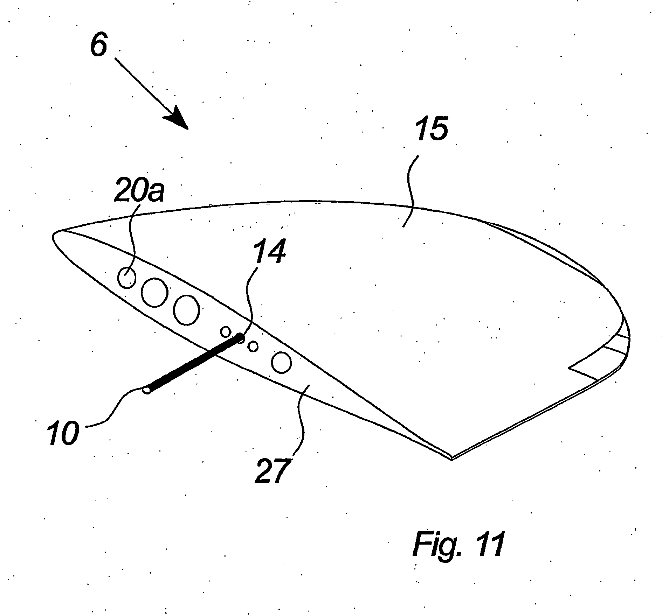

Fig. 11 illustrates another embodiment of the blade tip according to the invention. The blade tip is illustrated as just one part with perforations or openings for the rods and the lightning down conductor. The rods are entered into the openings and secured e.g. by using one or two component epoxy glue as described above in connection with the preferred embodiment. The end of the lightning down conductor is also entered into the chosen opening and secured e.g. by establishing a mechanical joint. The mechanical joint may be established by drilling holes from the surface of the tip into the opening of the lightning down conductor. Bolts may be screwed down against the end of the lightning down conductor after the end is entered into the opening. The bolt heads are preferably countersunk and the holes in the surface subsequently filled with filler material.

The blade tip may be in solid metal apart from the perforations or openings for the rods and the down conductor e.g. by casting and drilling. However, further openings may be drilled next to the necessary opening in order to remove metal from the blade tip. Even further, solid sections may be connected to or surrounded by metal plates establishing a partly hollow blade tip construction e.g. comprising metal plates welded to solid sections along the front and trailing edges.

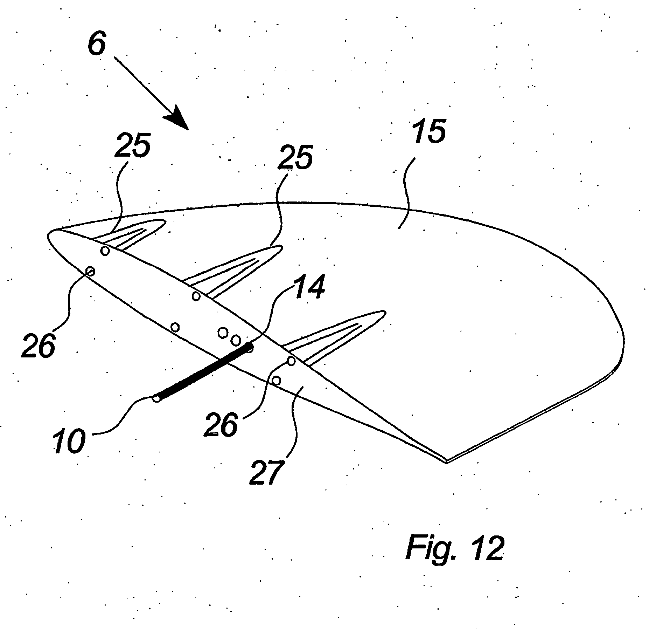

Fig. 12 illustrates a further embodiment of the above-mentioned one part blade tip. The surface of the blade tip comprises a number of grooves 25 extending vertically toward the bottom of the blade tip. The grooves dig increasingly deeper in the surface as the grooves approach the bottom of the blade tip. The grooves stop just before the bottom which allows a sort of flange to be established. The flange is penetrated by bolt holes 26 and hereby, a number of holes is established at the periphery of the bottom 13 of the blade tip.

A number of bolts are entered from above through the grooves and the holes into the opening at the mounting and securing of the blade tip. The bolts may enter into a glue filled opening and/or be screwed into a mounting wall inside the blade. Further, the bolts may be used as the only blade tip securing means or be combined with rods as described above. The grooves may be filled with filler material after the securing of the blade tip to the blade.

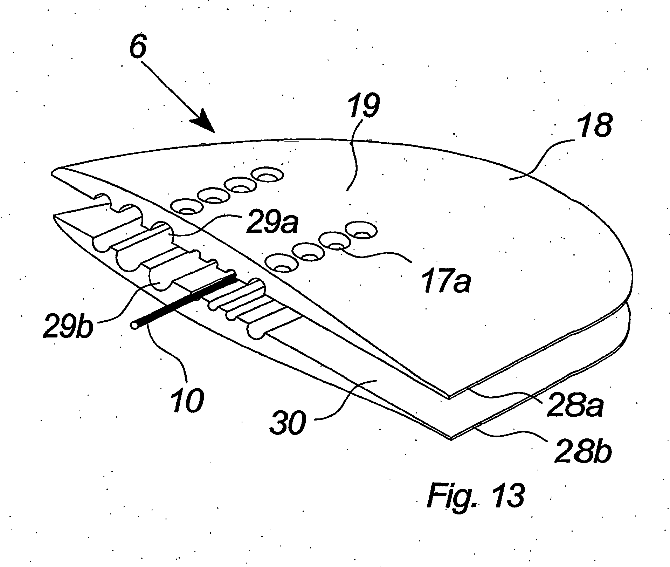

Fig. 13 illustrates an even further embodiment of the blade tip according to the invention. The embodiment comprises two parts 28a, 28b. Each part is a part of the blade tip 6 when being divided in the direction from the front to trailing edge and the two parts together form the full shape of the blade tip. The inner surface 30 of one part facing the another part comprises a number of hole halves 29a, 29b in which two corresponding hole halves establish a hole when the parts are connected. The number of holes or openings for rods and lightning down conduction corresponds to the number of openings described in connection with the preferred embodiment.

The rods are positioned in one part's hole halves and the other part is secured on top of the part by using bolts extending through the mounting holes 17a. The parts squeeze the rods and the lightning down conductor when the bolts are tightened and thus retain them in position. The blade tip is secured to the blade after the tightening of the bolts.

Figs. 11 to 13 illustrate embodiments of the blade tip according to the invention which differ in some way from the embodiment of figs. 3 to fig. 10. However, at least some of the choices such as choice of materials e.g. of the blade tip, of any rods or adhesive material, the number of items and sizes may be the same if not specifically mentioned to be different.

The invention has been exemplified above with reference to specific examples of the blade tip as well as the wind turbine blade. However, it should be understood that the invention is not limited to the particular examples described above but may be altered e.g. in size and shape. Further, it should be understood that especially the blade tip may be designed in a multitude of varieties within the scope of the invention as specified in the claims. Further, the way of bonding the blade tip to the wind turbine blade may be altered as well as the way of fixating the lightning down conductor to the blade tip.

Further, it shall be emphasized that the solid metal sections may be altered in number, size and position.

Finally, it shall be emphasized that sections of the blade tip according to the invention may be made in another material than metal e.g. a material with good ability to withstanding high temperatures such as carbon fibers. Especially, the inner tip part may be made in other materials than metals or combinations of metals and other materials than metals.

### List

- 1.: Wind turbine
- 2.: Wind turbine tower
- 3.: Wind turbine nacelle
- 4.: Wind turbine hub
- 5.: Wind turbine rotor blade
- 6.: Rotor blade tip
- 7.: Lightning
- 8.: Blade tip or lightning receptor
- 9.: Connection rods
- 10.: Lightning down conductor
- 11a, 11b.: Leading and trailing edge
- 12.: Ground potential
- 13.: Inner tip part
- 14.: Connection area for the lightning down conductor
- 15.: Outer tip part
- 16.: Holding area for the inner tip part
- 17a, 17b.: Mounting holes in the outer tip part of the blade tip or just the blade tip
- 18.: Top point of the blade tip or lightning receptor
- 19.: Surface of the blade tip or lightning receptor
- 20a-20d.: Holes for connection rods
- 21.: Mounting slit
- 22.: Mounting holes in the inner tip part
- 23.: Securing holes for the lightning down conductor
- 24.: Securing block for the lightning down conductor
- 25.: Mounting grooves for bolts
- 26.: Mounting holes for bolts
- 27.: Bottom of the blade tip
- 28a, 28b.: First and second blade tip part
- 29a, 29b.: Corresponding halves establishing a hole
- 30.: Inner surface of the second blade tip part
- c.: Cord length of the wind turbine blade
- t.: Thickness of the wind turbine blade
- t/c: Relation at the thickest position on the cord

## Claims

1. Wind turbine blade (5) comprising lightning protection means wherein
at least one section of the blade tip (6) is made of solid metal and is included as part of said lightning protection means (8,10,12), and
**characterised in that**
the blade tip (6) comprises an outer (15) and inner tip part (13) wherein the inner part is integrated into the outer tip part.

2. Wind turbine blade (5) according to claim 1, **characterised in that** said blade tip (6) is made of metal.

3. Wind turbine blade (5) according to claim 1 or 2, **characterised in that** said metal comprises a metal alloy.

4. Wind turbine blade (5) according to any of claims 1 to 3, **characterised in that** said metal comprises a copper alloy such as CuSn₁₀Zn₂ (Bronze RG10), CuSn₅Zn₅Pb₅ (Bronze LG2) or brass or an aluminium alloy such as aluminium bronze.

5. Wind turbine blade (5) according to any of claims 1 to 4, **characterised in that** said at least one section made in solid metal includes the initial curved or bent parts of the leading (11a) and/or trailing edges (11b) seen from the top point (18).

6. Wind turbine blade (5) according to any of claims 1 to 5, **characterised in that** said at least one section made of solid metal includes the section or sections behind the leading (11a) and/or trailing edges of the blade tip.

7. Wind turbine blade (5) according to any of claims 1 to 6, **characterised in that** said at least one section made of solid metal includes all the sections behind the surface of the blade tip.

8. Wind turbine blade (5) according to any of claims 1 to 7, **characterised in that** said at least one section made of solid metal includes the initial curved or bent parts of the leading (11a), trailing edges (11b) and the top point (18) as one section or as separate sections.

9. Wind turbine blade (5) according to any of claims 1 to 8, **characterised in that** the length of said at least one section made of solid metal in the longitudinal direction of the wind turbine blade is below 1 % of the total blade length and preferably between 0.1 % and 0.5 % of the total blade length.

10. Wind turbine blade (5) according to any of claims 1 to 9, **characterised in that** said blade tip comprises a thickness/cord relationship less than 14.%.

11. Wind turbine blade (5) according to any of claims 1 to 10, **characterised in that** the blade tip being painted e.g. in a white or grey colour.

12. Wind turbine blade (5) according to any of claims 1 to 11, **characterised in that** said blade tip (6) comprises a size at the bottom (27) allowing mounting with connection rods (9) into an opening at the top of the wind turbine blade.

13. Wind turbine blade (5) according to claim 12, **characterised i n that** said connection rods (9) are made in a non-conductive material such as glass fibre e.g. pultruded glass fibre rods.

14. Wind turbine blade (5) according to claim 12 or 13, **characterised in that** the length of said connection rods (9) ranges between 150 and 800 millimeters preferably with between 40 and 200 millimeters entered into the openings of the blade tip and between 110 and 600 millimeters entered into the blade opening.

15. Wind turbine blade (5) according to any of claims 12 to 14, **characterised in that** the diameters of said connection rods (9) range between 5 and 50 millimeters such as 10, 20 or 30 millimeters.

16. Wind turbine blade (5) according to any of claims 12 to 15, **characterised in that** the number of said connection rods (9) is between 3 and 6 such as 4 or 5 rods.

17. Wind turbine blade (5) according to any of claims 12 to 16, **characterised in that** the interior of the blade being sealed with barrier walls of a foam material, such as PVC foam, beneath and/or beside the range of said connection rods (9).

18. Wind turbine blade (5) according to claim 17, **characterised in that** the volume defined by said barrier walls being filled with a strong adhesive material such as one or two component epoxy glue.

19. Wind turbine blade (5) according to any of claims 1 to 18, **characterised in that** said outer tip part (15) defines the outline of the blade tip (6).

20. Wind turbine blade (5) according to any of claims 1 to 19, **characterised in that** the bottom of said outer tip part (15) comprises an indentation substantially corresponding to the shape of said inner tip part (13) and provides a holding area (16) for said inner tip part.

21. Wind turbine blade (5) according to any of claims 1 to 20, **characterised in that** said inner tip part (13) comprises a connection area (14) for the lightning down conductor (10) and at least one mounting hole (20a-20d) for said connection rods (9).

22. Wind turbine blade (5) according to claim **21, characterised in that** said connection area (14) further comprises retaining means for the lightning down conductor such as a retaining block (24)

23. Wind turbine blade (5) according to any of claims I to 22, **characterised in that** said blade tip (6) weights at least 5 kilograms and usually more than 10 kilograms such as approximately 12 kilograms with a 32 meter wind turbine blade.

24. Wind turbine blade (5) according to any of claims 1 to 23, **characterised in that** an end of said lightning down conductor (10) is clamped with a conductor connector such as a conductor sleeve corresponding in shape to at least one opening (14) in the blade tip.

25. Wind turbine (1) comprising
stationary means such as a nacelle (3) and a tower (2),
rotating means such as a rotor including at least one wind turbine blade (5) according to any of claims 1 to 24.
said stationary and rotating means include lightning protection means connected to a ground potential (12),

26. Wind turbine (1) according to claim 25, **characterised i n that** said blade tip comprises a thickness/cord relationship less than 14 %.

27. Method of providing lightning receptor means to a wind turbine blade with lightning protection means, said method comprising the steps of:
establishing a wind turbine blade ready for mounting of a blade tip,
positioning a blade tip comprising an outer and inner tip part wherein the inner part is integrated into the outer tip part,
including at least one section made of solid metal at the tip position of the blade,
connecting said inner tip part to the lightning protection means of the blade, and
connecting said blade tip including at least one section made of solid metal to the wind turbine blade with connection rods.

28. Method according to claim 27, where said blade tip including at least one section made of solid metal replaces the normal blade tip of a wind turbine blade.

29. Method according to claim 27 or 28, where said blade tip including at least one section made in solid metal retrofits the normal blade tip of a wind turbine blade.

30. Method according to any of the claims 27 to 29, where the wind turbine blade ready for blade tip including at least one section made of solid metal is established by removing the normal blade tip with a cutting process.

31. Method according to any of the claims 27 to 30, where the interior of the blade is sealed with barrier walls of a foam material beneath and/or beside the range of the connection rods.

32. Method according to claim 31, where the volume defined by said barrier walls is filled with a strong adhesive material such as one or two component epoxy glue.

33. Method according to claim 31 or 32, where the connection rods of said blade tip including at least one section made in solid metal are entered into said volume of the wind turbine blade.

34. Method according to any of the claims 31 to 33, where the bottom of said blade tip including at least one section made of solid metal is also entered into said volume of the wind turbine blade.

35. Method according to any of the claims 31 to 34, where finishing work is performed to the wind turbine blade as such and the blade tip is painted e.g. in a white or grey colour.

36. Use of a method according to any of the claims 27 to 35 in connection with retrofitting a blade tip including at least one section made of solid metal to a wind turbine blade.

## Patentansprüche

1. Windturbinenschaufel (5), die Blitzschutzmittel umfasst, wobei mindestens ein Abschnitt der Schaufelspitze (6) aus massivem Metall gefertigt und als Teil der Blitzschutzmittel (8, 10, 12) eingebunden ist, und
**dadurch gekennzeichnet, dass**
die Schaufelspitze (6) ein äußeres (15) und ein inneres Spitzenteil (13) umfasst, wobei das innere Spitzenteil in das äußere Spitzenteil integriert ist.

2. Windturbinenschaufel (5) gemäß Anspruch 1, **dadurch gekennzeichnet, dass** die Schaufelspitze (6) aus Metall gefertigt ist.

3. Windturbinenschaufel (5) gemäß Anspruch 1 oder 2, **dadurch gekennzeichnet, dass** das Metall eine Metalllegierung umfasst.

4. Windturbinenschaufel (5) gemäß einem der Ansprüche 1 bis 3,
**dadurch gekennzeichnet, dass** das Metall eine Kupferlegierung, beispielsweise CuSn₁₀Zn₂ (Bronze RG10), CuSn₅Zn₅Pb₅ (Bronze LG2) oder Messing, oder eine Aluminiumlegierung, wie beispielsweise Aluminiumbronze, umfasst.

5. Windturbinenschaufel (5) gemäß einem der Ansprüche 1 bis 4,
**dadurch gekennzeichnet, dass** der mindestens eine Abschnitt, der aus massivem Metall gefertigt ist, die anfänglichen gekrümmten oder gebogenen Teile der An- (11a) und/oder Abströmkanten (11b) vom Höchstpunkt (18) aus gesehen einschließt.

6. Windturbinenschaufel (5) gemäß einem der Ansprüche 1 bis 5,
**dadurch gekennzeichnet, dass** mindestens ein Abschnitt, der aus massivem Metall gefertigt ist, den Abschnitt oder die Abschnitte hinter den An- (11a) und/oder Abströmkanten der Schaufelspitze einschließt.

7. Windturbinenschaufel (5) gemäß einem der Ansprüche 1 bis 6, **dadurch gekennzeichnet, dass** mindestens ein Abschnitt, der aus massivem Metall gefertigt ist, alle Abschnitte hinter der Oberfläche der Schaufelspitze einschließt.

8. Windturbinenschaufel (5) gemäß einem der Ansprüche 1 bis 7, **dadurch gekennzeichnet, dass** der mindestens eine Abschnitt, der aus massivem Metall gefertigt ist, die anfänglichen gekrümmten oder gebogenen Teile der Anström- (11a), der Abströmkanten (11b) und des Höchstpunkts (18) als einen Abschnitt oder als separate Abschnitte einschließt.

9. Windturbinenschaufel (5) gemäß einem der Ansprüche 1 bis 8, **dadurch gekennzeichnet, dass** die Länge des mindestens einen Abschnitts, der aus massivem Metall gefertigt ist, in der Längsrichtung der Windturbinenschaufel unter 1 % der Schaufelgesamtlänge und vorzugsweise zwischen 0,1 % und 0,5 % der Schaufelgesamtlänge liegt.

10. Windturbinenschaufel (5) gemäß einem der Ansprüche 1 bis 9, **dadurch gekennzeichnet, dass** die Schaufelspitze ein Dicke/Cord-Verhältnis von weniger als 14% umfasst.

11. Windturbinenschaufel (5) gemäß einem der Ansprüche 1 bis 10, **dadurch gekennzeichnet, dass** die Schaufelspitze beispielsweise in einer weißen oder grauen Farbe angestrichen ist.

12. Windturbinenschaufel (5) gemäß einem der Ansprüche 1 bis 11, **dadurch gekennzeichnet, dass** die Schaufelspitze (6) am Fuß (27) eine Größe umfasst, die ein Anbringen mittels Verbindungsstangen (9) in eine Öffnung an der Spitze der Windturbinenschaufel ermöglicht.

13. Windturbinenschaufel (5) gemäß Anspruch 12, **dadurch gekennzeichnet, dass** die Verbindungsstangen (9) aus einem nicht leitfähigen Material, wie beispielsweise Glasfaser, zum Beispiel stranggezogene Glasfaserstangen, gefertigt sind.

14. Windturbinenschaufel (5) gemäß Anspruch 12 oder 13, **dadurch gekennzeichnet, dass** die Länge der Verbindungsstangen (9) im Bereich zwischen 150 und 800 Millimetern liegt, wobei vorzugsweise 40 bis 200 Millimeter in die Öffnungen der Schaufelspitze eingeschoben sind und zwischen 110 und 600 Millimetern in die Schaufelöffnung eingeschoben sind.

15. Windturbinenschaufel (5) gemäß einem der Ansprüche 12 bis 14, **dadurch gekennzeichnet, dass** die Durchmesser der Verbindungsstangen (9) im Bereich zwischen 5 und 50 Millimetern, wie beispielsweise 10, 20 oder 30 Millimeter, liegen.

16. Windturbinenschaufel (5) gemäß einem der Ansprüche 12 bis 15, **dadurch gekennzeichnet, dass** die Anzahl der Verbindungsstangen (9) zwischen 3 und 6, wie beispielsweise 4 oder 5 Stangen liegt.

17. Windturbinenschaufel (5) gemäß einem der Ansprüche 12 bis 16, **dadurch gekennzeichnet, dass** das Innere der Schaufel mit Barrierewänden aus Schaumstoff, wie beispielsweise PVC-Schaum, unterhalb und/oder neben des Bereichs der Verbindungsstangen (9) abgedichtet ist.

18. Windturbinenschaufel (5) gemäß Anspruch 17, **dadurch gekennzeichnet, dass** das Volumen, das durch die Barrierewände definiert ist, mit einem starken Klebematerial, wie beispielsweise Ein- oder Zweikomponenten-Epoxidkleber, gefüllt ist.

19. Windturbinenschaufel (5) gemäß einem der Ansprüche 1 bis 18, **dadurch gekennzeichnet, dass** das äußere Spitzenteil (15) die Kontur der Schaufelspitze (6) definiert.

20. Windturbinenschaufel (5) gemäß einem der Ansprüche 1 bis 19, **dadurch gekennzeichnet, dass** der Fuß des äußeren Spitzenteils (15) eine Einbuchtung umfasst, die im Wesentlichen mit der Form des inneren Spitzenteils (13) korrespondiert und einen Haltebereich (16) für das innere Spitzenteil bereitstellt.

21. Windturbinenschaufel (5) gemäß einem der Ansprüche 1 bis 20, **dadurch gekennzeichnet, dass** das innere Spitzenteil (13) einen Verbindungsbereich (14) für den Blitzableiter (10) umfasst und mindestens ein Anbringungsloch (20a-20d) für die Verbindungsstangen (9) umfasst.

22. Windturbinenschaufel (5) gemäß Anspruch 21, **dadurch gekennzeichnet, dass** der Verbindungsbereich (14) außerdem Festhaltemittel für den Blitzableiter, wie beispielsweise einen Festhalteblock (24), umfasst.

23. Windturbinenschaufel (5) gemäß einem der Ansprüche 1 bis 22, **dadurch gekennzeichnet, dass** die Schaufelspitze (6) mindestens 5 Kilogramm und für Gewöhnlich mehr als 10 Kilogramm, beispielsweise ungefähr 12 Kilogramm bei einer 32-Meter-Windturbinenschaufel, wiegt.

24. Windturbinenschaufel (5) gemäß einem der Ansprüche 1 bis 23,
**dadurch gekennzeichnet, dass** ein Ende des Blitzableiters (10) mit einem Leiterverbinder, wie beispielsweise einer Leiterhülse, die hinsichtlich der Form mit der mindestens einen Öffnung (14) in der Schaufelspitze korrespondiert, verklemmt ist.

25. Windturbine (1), umfassend
stationäre Mittel, wie beispielsweise eine Gondel (3) und einen Turm (2),
rotierende Mittel, wie beispielsweise einen Rotor, der mindestens eine Windturbinenschaufel (5) gemäß einem der Ansprüche 1 bis 24 einschließt,
wobei die stationären und rotierenden Mittel Blitzschutzmittel einschließen, die mit einem Erdpotential (12) verbunden sind.

26. Windturbine (1) gemäß Anspruch 25, **dadurch gekennzeichnet, dass** die Schaufelspitze ein Dicke/Cord-Verhältnis von weniger als 14 % umfasst.

27. Verfahren zum Bereitstellen von Blitzaufnahmemitteln an einer Windturbinenschaufel mit Blitzschutzmitteln, wobei das Verfahren die Schritte umfasst:
Einrichten einer Windturbinenschaufel, die zum Anbringen einer Schaufelspitze bereit ist,
Positionieren einer Schaufelspitze, die ein äußeres und ein inneres Teil umfasst, wobei das innere Teil in den äußeren Teil integriert ist,
Einfügen mindestens eines Abschnitts, der aus massivem Metall gefertigt ist, an der Spitzenposition der Schaufel,
Verbinden des inneren Spitzenteils mit den Blitzschutzmitteln der Schaufel, und
Verbinden der Schaufelspitze, die mindestens einen Abschnitt einschließt, der aus massivem Metall gefertigt ist, mit der Windturbinenschaufel mittels Verbindungsstangen.

28. Verfahren gemäß Anspruch 27, wobei die Schaufelspitze, die mindestens einen Abschnitt einschließt, der aus massivem Metall gefertigt ist, die normale Schaufelspitze einer Windturbinenschaufel ersetzt.

29. Verfahren gemäß Anspruch 27 oder 28, wobei die Schaufelspitze, die mindestens einen Abschnitt einschließt, der aus massivem Metall gefertigt ist, die normale Schaufelspitze einer Windturbinenschaufel umrüstet.

30. Verfahren gemäß einem der Ansprüche 27 bis 29, wobei die Windturbinenschaufel, die bereit ist für eine Schaufelspitze, die mindestens einen Abschnitt, der aus massivem Metall gefertigt ist, einschließt, durch Entfernen der normalen Schaufelspitze mittels eines Schneidprozesses eingerichtet wird.

31. Verfahren gemäß einem der Ansprüche 27 bis 30, wobei das Innere der Schaufel mit Barrierewänden aus einem Schaumstoff unterhalb und/oder neben des Bereichs der Verbindungsstangen abgedichtet wird.

32. Verfahren gemäß Anspruch 31, wobei das Volumen, das durch die Barrierewände definiert ist, mit einem starken Klebematerial, wie beispielsweise Ein- oder Zweikomponenten-Epoxidkleber, gefüllt wird.

33. Verfahren gemäß Anspruch 31 oder 32, wobei die Verbindungsstangen des Schaufelspitze, die mindestens einen Abschnitt, der aus massivem Metall gefertigt ist, einschließt, in das Volumen der Windturbinenschaufel eingeführt werden.

34. Verfahren gemäß einem der Ansprüche 31 bis 33, wobei der Fuß der Schaufelspitze, die mindestens einen Abschnitt, der aus massivem Metall gefertigt ist, einschließt, ebenfalls in das Volumen der Windturbinenschaufel eingeführt wird.

35. Verfahren gemäß einem der Ansprüche 31 bis 34, wobei eine Endbearbeitung an der Windturbinenschaufel an sich durchgeführt wird und die Schaufelspitze beispielsweise in einer weißen oder grauen Farbe angestrichen wird.

36. Verwenden eines Verfahrens gemäß einem der Ansprüche 27 bis 35 in Verbindung mit dem Nachrüsten einer Schaufelspitze, die mindestens einen Abschnitt, der aus massivem Metall gefertigt ist, einschließt, an einer Windturbinenschaufel.

## Revendications

1. Pale de turbine d'éolienne (5) comprenant des moyens de protection contre la foudre, dans laquelle :
au moins une section de la pointe (6) de la pale est constituée d'un métal plein et est incluse en tant que partie desdits moyens de protection contre la foudre (8, 10, 12), et
**caractérisée en ce que** la pointe (6) de la pale comprend une partie de pointe externe (15) et une partie de pointe interne (13), dans laquelle la partie interne est intégrée à la partie de pointe externe.

2. Pale de turbine d'éolienne (5) selon la revendication 1, **caractérisée en ce que** ladite pointe de pale (6) est constituée d'un métal.

3. Pale de turbine d'éolienne (5) selon la revendication 1 ou la revendication 2, **caractérisée en ce que** ledit métal comprend un alliage métallique.

4. Pale de turbine d'éolienne (5) selon l'une quelconque des revendications 1 à 3, **caractérisée en ce que** ledit métal comprend un alliage de cuivre tel que CuSn₁₀Zn₂ (bronze RG10), CuSn₅Zn₅Pb₅ (bronze LG2) ou du laiton ou un alliage d'aluminium tel que du bronze d'aluminium.

5. Pale de turbine d'éolienne (5) selon l'une quelconque des revendications 1 à 4, **caractérisée en ce que** ladite au moins une section constituée d'un métal plein comprend les parties incurvées ou cintrées initiales des bords d'attaque (11a) et/ou de fuite (11b) observées depuis la pointe supérieure (18).

6. Pale de turbine d'éolienne (5) selon l'une quelconque des revendications 1 à 5, **caractérisée en ce que** ladite au moins une section constituée de métal plein comprend la ou les sections qui se trouvent derrière les bords d'attaque (11a) et/ou de fuite de la pointe de la pale.

7. Pale de turbine d'éolienne (5) selon l'une quelconque des revendications 1 à 6, **caractérisée en ce que** ladite au moins une section constituée de métal plein comprend toutes les sections qui se trouvent derrière la surface de la pointe de la pale.

8. Pale de turbine d'éolienne (5) selon l'une quelconque des revendications 1 à 7, **caractérisée en ce que** ladite au moins une section constituée de métal plein comprend les parties incurvées ou cintrées initiales des bords d'attaque (11a) et de fuite (11b) et la pointe supérieure (18) sous la forme d'une seule section ou de sections séparées.

9. Pale de turbine d'éolienne (5) selon l'une quelconque des revendications 1 à 8, **caractérisée en ce que** la longueur de ladite au moins une section constituée de métal plein dans la direction longitudinale de la pale de turbine d'éolienne se situe en dessous de 1 % de la longueur totale de la pale et, de préférence, entre 0,1 % et 0,5 % de la longueur totale de la pale.

10. Pale de turbine d'éolienne (5) selon l'une quelconque des revendications 1 à 9, **caractérisée en ce que** ladite pointe de pale comprend un rapport épaisseur/corde inférieur à 14 %.

11. Pale de turbine d'éolienne (5) selon l'une quelconque des revendications 1 à 10, **caractérisée en ce que** la pointe de pale est peinte, par exemple, en couleur blanche ou grise.

12. Pale de turbine d'éolienne (5) selon l'une quelconque des revendications 1 à 11, **caractérisée en ce que** ladite pointe de pale (6) comprend une taille dans la partie inférieure (27) qui permet un montage avec des biellettes de liaison (9) dans une ouverture au sommet de la pale de la turbine d'éolienne.

13. Pale de turbine d'éolienne (5) selon la revendication 12, **caractérisée en ce que** lesdites biellettes de liaison (9) sont constituées d'un matériau non conducteur, tel que de la fibre de verre, par exemple des biellettes de fibres de verre extrudées par étirage.

14. Pale de turbine d'éolienne (5) selon la revendication 12 ou la revendication 13, **caractérisée en ce que** la longueur desdites biellettes de liaison (9) se situe entre 150 et 800 millimètres, de préférence avec entre 40 et 200 millimètres insérés dans les ouvertures de la pointe de la pale et entre 110 et 600 millimètres insérés dans l'ouverture de la pale.

15. Pale de turbine d'éolienne (5) selon l'une quelconque des revendications 12 à 14, **caractérisée en ce que** les diamètres desdites biellettes de liaison (9) se situent entre 5 et 50 millimètres, notamment 10, 20 ou 30 millimètres.

16. Pale de turbine d'éolienne (5) selon l'une quelconque des revendications 12 à 15, **caractérisée en ce que** le nombre desdites biellettes de liaison (9) se situe entre 3 et 6, notamment 4 ou 5 biellettes.

17. Pale de turbine d'éolienne (5) selon l'une quelconque des revendications 12 à 16, **caractérisée en ce que** l'intérieur de la pale est scellé par des parois barrières d'un matériau en mousse, tel que de la mousse de PVC, en dessous et/ou à côté de l'extension desdites biellettes de liaison (9).

18. Pale de turbine d'éolienne (5) selon la revendication 17, **caractérisée en ce que** le volume défini par lesdites parois barrières est rempli d'une matière adhésive forte telle qu'une colle époxy à un ou deux composants.

19. Pale de turbine d'éolienne (5) selon l'une quelconque des revendications 1 à 18, **caractérisée en ce que** ladite partie de pointe externe (15) définit le contour de la pointe (6) de la pale.

20. Pale de turbine d'éolienne (5) selon l'une quelconque des revendications 1 à 19, **caractérisée en ce que** la partie inférieure de ladite partie de pointe externe (15) comprend une indentation correspondant sensiblement à la forme de ladite partie de pointe interne (13) et fournit une zone de retenue (16) pour ladite partie de pointe interne.

21. Pale de turbine d'éolienne (5) selon l'une quelconque des revendications 1 à 20, **caractérisée en ce que** ladite partie de pointe interne (13) comprend une zone de connexion (14) pour le paratonnerre (10) et au moins un trou de montage (20a-20d) pour lesdites biellettes de liaison (9).

22. Pale de turbine d'éolienne (5) selon la revendication 21, **caractérisée en ce que** ladite zone de connexion (14) comprend en outre des moyens de retenue pour le paratonnerre, tels qu'un bloc de retenue (24).

23. Pale de turbine d'éolienne (5) selon l'une quelconque des revendications 1 à 22, **caractérisée en ce que** ladite pointe de pale (6) pèse au moins 5 kilogrammes et habituellement plus de 10 kilogrammes, notamment environ 12 kilogrammes avec une pale de turbine d'éolienne de 32 mètres.

24. Pale de turbine d'éolienne (5) selon l'une quelconque des revendications 1 à 23, **caractérisée en ce qu'**une extrémité dudit paratonnerre (10) est bloquée avec un connecteur conducteur tel qu'un manchon conducteur dont la forme correspond à celle d'au moins une ouverture (14) de la pointe de la pale.

25. Turbine d'éolienne (1) comprenant :
des moyens stationnaires, tels qu'une nacelle (3) et une tour (2),
des moyens rotatifs, tels qu'un rotor comprenant au moins une pale de turbine d'éolienne (5) selon l'une quelconque des revendications 1 à 24,
lesdits moyens stationnaires et rotatifs comprenant des moyens de protection contre la foudre connectés à un potentiel de terre (12).

26. Turbine d'éolienne (1) selon la revendication 25, **caractérisée en ce que** ladite pointe de la pale comprend un rapport épaisseur/corde inférieur à 14 %.

27. Procédé de mise en oeuvre de moyens récepteurs de foudre sur une pale de turbine d'éolienne avec des moyens de protection contre la foudre, ledit procédé comprenant les étapes consistant à :
établir une pale de turbine d'éolienne prête au montage d'une pointe de pale,
positionner une pale de turbine comprenant une partie de pointe externe et une partie de pointe interne, dans lequel la partie interne est intégrée à la partie de pointe externe,
inclure au moins une section constituée de métal plein dans la position de pointe de la pale,
raccorder ladite partie de pointe interne aux moyens de protection contre la foudre de la pale et
raccorder ladite pointe de pale comprenant au moins une section constituée de métal plein à la pale de turbine d'éolienne par des biellettes de liaison.

28. Procédé selon la revendication 27, dans lequel ladite pointe de pale comprenant au moins une section constituée de métal plein remplace la pointe de pale normale d'une pale de turbine d'éolienne.

29. Procédé selon la revendication 27 ou la revendication 28, dans lequel ladite pointe de pale comprenant au moins une section constituée d'un métal plein rajuste la pointe de pale normale d'une pale de turbine d'éolienne.

30. Procédé selon l'une quelconque des revendications 27 à 29, dans lequel la pale de turbine d'éolienne prête à l'ajustement d'une pointe de pale comprenant au moins une section constituée de métal plein est établie en retirant la pointe de pale normale par un procédé de coupe.

31. Procédé selon l'une quelconque des revendications 27 à 30, dans lequel l'intérieur de la pale est scellé par des parois barrières d'un matériau en mousse en dessous et/ou à côté de l'extension des biellettes de liaison.

32. Procédé selon la revendication 31, dans lequel le volume défini par lesdites parois barrières est rempli d'une matière adhésive forte, telle qu'une colle époxy à un ou deux composants.

33. Procédé selon la revendication 31 ou la revendication 32, dans lequel les biellettes de liaison de ladite pointe de pale comprenant au moins une section constituée d'un métal plein sont insérées dans ledit volume de ladite pale de turbine d'éolienne.

34. Procédé selon l'une quelconque des revendications 31 à 33, dans lequel la partie inférieure de ladite pointe de pale comprenant au moins une section constituée d'un métal plein est également insérée dans ledit volume de ladite pale de turbine d'éolienne.

35. Procédé selon l'une quelconque des revendications 31 à 34, dans lequel des travaux de finition sont effectués sur la pale de turbine d'éolienne en tant que telle et la pointe de la pale est peinte, par exemple, en couleur blanche ou grise.

36. Utilisation d'un procédé selon l'une quelconque des revendications 27 à 35 en liaison avec le rajustement d'une pointe de pale comprenant au moins une section constituée d'un métal plein sur une pale de turbine d'éolienne.
